## Europäisches Patentamt

## European Patent Office

## Office européen des brevets

(11) Veröffentlichungsnummer: **0 118 045**

**A1**

(12) **EUROPÄISCHE PATENTANMELDUNG**

(21) Anmeldenummer: **84101224.8**

(22) Anmeldetag: **07.02.84**

(51) Int. Cl.³: **G 12 B 11/02**
**G 01 D 13/02, G 01 R 1/08**

(30) Priorität: **09.02.83 DE 3304356**

(43) Veröffentlichungstag der Anmeldung:
**12.09.84 Patentblatt 84/37**

(84) Benannte Vertragsstaaten:
**DE FR GB IT NL SE**

(71) Anmelder: **International Standard Electric Corporation
320 Park Avenue
New York New York 10022(US)**

(84) Benannte Vertragsstaaten:
**FR GB IT NL SE**

(71) Anmelder: **Standard Elektrik Lorenz Aktiengesellschaft
Hellmuth-Hirth-Strasse 42
D-7000 Stuttgart 40(DE)**

(84) Benannte Vertragsstaaten:
**DE**

(72) Erfinder: **Mirbeth, Heinz Georg
Fasanenweg 49
D-8501 Eckental(DE)**

(74) Vertreter: **Fritsch, Helmut, Dipl.-Chem. et al,
c/o Standard Elektrik Lorenz AG Patent- und
Lizenzwesen Postfach 300 929 Kurze Strasse 8
D-7000 Stuttgart 30(DE)**

(54) In einem Gehäuse angeordnetes Messinstrument.

㉛57 Bei einem in einem Gehäuse angeordneten Meßinstrument ist die Blende (2) an die Skalenplatte (1) angeformt. Gleichzeitig kann auch noch die Halterung (7, 8, 9) für das Deckglas angeformt sein. Alle diese Teile bestehen aus einem durch Stanzen und Biegen geformten Blechteil. Dadurch ergibt sich ein sehr einfacher Aufbau und eine einfache Montage.

Fig.5

EP 0 118 045 A1

Croydon Printing Company Ltd.

H.G.Mirbeth 30

In einem Gehäuse angeordnetes Meßinstrument

Die Erfindung bezieht sich auf ein in einem Gehäuse angeordnetes Meßinstrument mit einer Skalenplatte, einer darauf angeordneten Blende und einem auf der Blende angeordneten Deckglas.

Meßinstrumente sind zu ihrem Schutz meist in ein Gehäuse eingebaut, das an der Vorderseite ein Deckglas aufweist, durch welches die Skalenplatte und der Zeiger sichtbar sind. Zwischen Skalenplatte und Deckglas muß ein Zwischenraum vorhanden sein, in dem der Meßgerätezeiger spielen kann. Dieser Abstand zwischen Deckglas und Skalenplatte wird meist durch eine rahmenförmige Blende bewirkt, die gleichzeitig als Randabdeckung der Skalenplatte dient. In vielen Fällen wird die Blende als getrenntes Bauteil hergestellt und besteht meist aus einem anderen Werkstoff als die Skalenplatte. Zur guten Ablesbarkeit des angezeigten Wertes ist die Skalenplatte meist mit weißer Farbe beschichtet, auf der die Skala mit schwarzer Farbe in Form von Strichen aufgedruckt ist. Die rahmenförmige Blende besteht meist aus einem weißen Werkstoff, wie z.B. Kunststoff. Infolge des Materialunterschiedes zwischen Skalenoberfläche und Blende sind die Weißtöne der beiden Teile meist unterschiedlich, was sich störend beim Ablesen des Instrumentes auswirkt.

H.G.Mirbeth 30

Es sind auch in einem Gehäuse angeordnete Meßinstrumente bekannt, bei denen die Skalenplatte leicht auswechselbar ist. Ein solches Meßinstrument ist beispielsweise aus dem DE-GM 69 36 558 bekannt. Hier hat das Meßinstrumentengehäuse einen abdeckbaren Schlitz, durch den die Skalenplatte auswechselbar ist.

Bei Meßinstrumenten mit auswechselbarer Skalenplatte ist es auch bekannt, die Blende mit Führungsschienen oder Hinterschneidungen zu versehen, die zur Führung der Skalenplatte dienen. Solche Meßinstrumente sind aus der DE-OS 22 63 836 und der DE-OS 23 25 080 bekannt.

Man hat auch schon versucht, die Blende als getrenntes Bauteil zu vermeiden und zu diesem Zweck die Vorderkante des Gehäuses als Blende ausgebildet, wie es beispielsweise aus der DE-AS 21 02 888 bekannt ist, oder die Blende an den Gehäusemantel angeformt, wie es aus der DE-AS 22 06 979 bekannt ist. Hierdurch wird jedoch die Herstellung des Gehäuses noch komplizierter. Außerdem werden die Gehäuseteile meist aus schwarzem Kunststoff hergestellt, während die Blende zur besseren Ablesbarkeit der Skala in Weiß gehalten werden soll. Dies macht es erforderlich, bei einer am Gehäuse angeformten Blende, diese mit einem weißen Überzug zu versehen, was einen zusätzlichen Arbeitsgang bei der Herstellung des Gehäuses bedeutet. Außerdem ist es hierbei schwierig, die Blende mit einem gleichen Weißton zu versehen wie die Skalenplatte.

Aufgabe der Erfindung ist es, die Herstellung und Montage eines Meßinstrumentes der eingangs genannten Art zu vereinfachen und zu verbilligen.

0118045

3

H.G.Mirbeth 30

Diese Aufgabe wird durch die im Kennzeichen des Anspruchs 1 angegebene Maßnahme gelöst.

Vorteilhafte Weiterbildungen der Erfindung können den Unteransprüchen entnommen werden.

Durch die einstückige Ausbildung von Skalenplatte und Blende wird nicht nur die Herstellung und der Einbau eines zusätzlichen Blendenteiles vermieden, sondern es wird dadurch auch erreicht, daß Skala und Blende absolute Farbgleichheit aufweisen und daß die Sauberkeit der Blendenoberfläche verbessert wird. Im Gegensatz zu einer an den Gehäusemantel oder das Gehäuse angeformte Blende ist die Herstellung von einer an die Skalenplatte angeformten Blende sehr einfach und läßt sich sehr leicht mechanisieren. So kann z.B. die Skalenplatte aus einem Blech bestehen, das lackiert und mit der Skala bedruckt wird, wonach die Randteile durch einen weiteren einfachen Biegevorgang umgebogen werden, so daß sie die Blende bilden. Es ist hierbei auch ein nahtloser Übergang zwischen Skalenplatte und Blende vorhanden und die Farbgleichheit beider Teile absolut gewährleisten.

Gemäß der weiteren Ausbildung der Erfindung können an die Skalenplatte auch die Drehpunktabdeckung für den Meßwerkzeiger angeformt sein und auch die Anschläge für den Meßwerkzeiger.

Schließlich kann der Rand noch gleichzeitig so ausgebildet werden, daß er zur Halterung und Führung des Deckglases dient. Alle diese Teile werden durch einfache Verformung

H.G.Mirbeth 30

eines einzigen Blechteiles gebildet, das sich einfach in
einer mechanisierten Fertigung herstellen läßt. Dadurch
wird auch die Gehäuseform wesentlich einfacher, da keine
getrennten Führungen für Skalenplatte, Blende und Deckglas mehr vorgesehen werden müssen.

Die Erfindung soll anhand der Figuren näher beschrieben
werden.

Fig. 1 zeigt in Vorderansicht eine Skalenplatte mit
angeformter Blende gemäß der Erfindung, während

Fig. 2 einen Schnitt durch die Skalenplatte nach Fig. 1
zeigt.

Fig. 3 zeigt eine andere Ausführungsform der Skalenplatte
gemäß der Erfindung in Vorderansicht und in

Fig. 4 im Schnitt.

Fig. 5 zeigt eine weitere Ausführungsform der Skalenplatte
gemäß der Erfindung in Vorderansicht und in

Fig. 6 im Schnitt.

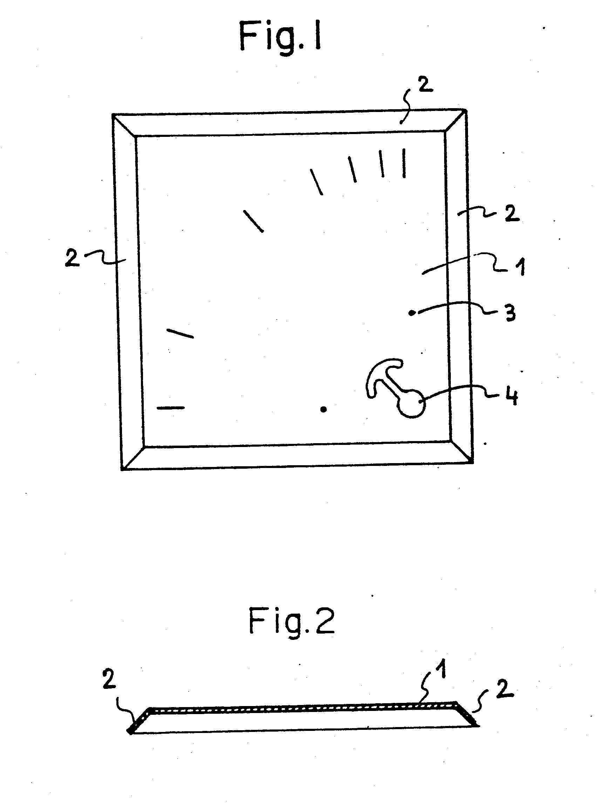

Die Skalenplatte 1 nach den Fig. 1 und 2 besteht vorzugsweise aus Blech und ist an ihrer Vorderseite mit einer
weißen Farbschicht überzogen, während die Rückseite vorzugsweise mit einem beliebigen Lack zum Schutz abgedeckt ist.
Die weiße Farbschicht auf der Vorderseite der Skalenplatte
1 ist dann mit der Skala bedruckt. Die Skalenplatte 1 kann

H.G.Mirbeth 30

in an sich bekannter Weise Löcher 3 zur Befestigung an dem Meßwerk haben, sowie eine Zeigerdurchtrittsöffnung 4. Gemäß der Erfindung ist die Blende 2 dadurch gebildet, daß Randteile der Skalenplatte 1 umgebogen sind, wie dies aus Fig. 2 erkennbar ist. An den Ecken der Skalenplatte 1 sind in den Randteilen beispielsweise geeignete ▭Stücke ausgestanzt, so daß sich nach dem Umbiegen der Randteile um einen bestimmten Winkel, wie es aus Fig. 2 erkennbar ist, die die Blende 2 bildenden Teile an den Ecken wieder zusammenfügen. Da sowohl die Skalenplatte 1 als auch die Blendenteile 2 in einem einzigen Verfahrensschritt mit der weißen Farbschicht versehen wurden, ist der Farbton von Skala und Blende vollkommen gleich und an den Biegekanten ist ein nahtloser Übergang zwischen Skalenplatte und Blende vorhanden. Die Blendenteile lassen sich durch einen einfachen Biegevorgang an die Skalenplatte anformen, so daß eine mechanisierte Fertigung möglich ist.

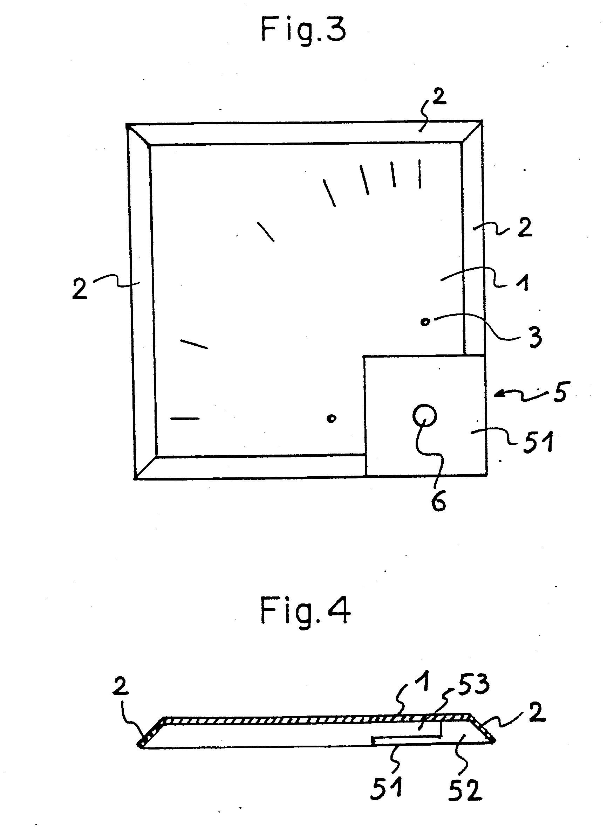

In den Fig. 3 und 4 ist eine weitere Ausführungsform der Erfindung dargestellt, bei der auch die übliche Drehpunktabdeckung für den Zeiger des Meßinstrumentes an die Skalenplatte angeformt ist. Es sei hier angenommen, daß es sich um ein Meßinstrument handelt, dessen Zeigerdrehpunkt sich in der rechten unteren Ecke der Skalenplatte 1 befindet. An die Skalenplatte 1, die ggfs. mit Befestigungslöchern 3 versehen ist, sind, wie zuvor erläutert, die Blendenteile 2 durch Umbiegen der Ränder der Skalenplatte gebildet. Bei dieser Ausführungsform ist nun zusätzlich die Drehpunktabdeckung 5 durch einen einfachen Stanz- und Biegevorgang aus der Skalenplatte 1 gebildet. Wie aus Fig. 4

H.G.Mirbeth 30

ersichtlich ist, hängt die Drehpunktabdeckung 5 über den Teil 52 mit der Skalenplatte 1 zusammen. Der Teil 52 ist dabei senkrecht zur Ebene der Skalenplatte 1 abgebogen, während der Teil 51 parallel zur Skalenplatte 1, und zwar in Abstand von dieser verläuft. Der Abstand zwischen den Teilen 51 und 1 ist vorzugsweise so bemessen, daß der Teil 51 mit dem umgebogenen Rand 2 des Blendenteils abschließt. Die ganze Anordnung aus Skalenplatte 1, Blendenrand 2 und Drehpunktabdeckung 5 ist somit durch Stanzen und Biegen eines einzigen Blechteiles gebildet und bildet eine einstückige Anordnung. Der Schlitz 53 dient zum Durchtritt des Meßwerkzeigers. Der Teil 51 kann in üblicher Weise ein Loch für die Justierschraube haben, mit der der Meßwerkzeiger auf den Nullpunkt eingestellt werden kann.

An die Drehpunktabdeckung 5 können noch zusätzlich Anschläge für den Meßwerkzeiger angeformt sein. Diese lassen sich in einfacher Weise durch Ausstanzen und Abbiegen entsprechender Zungen bilden.

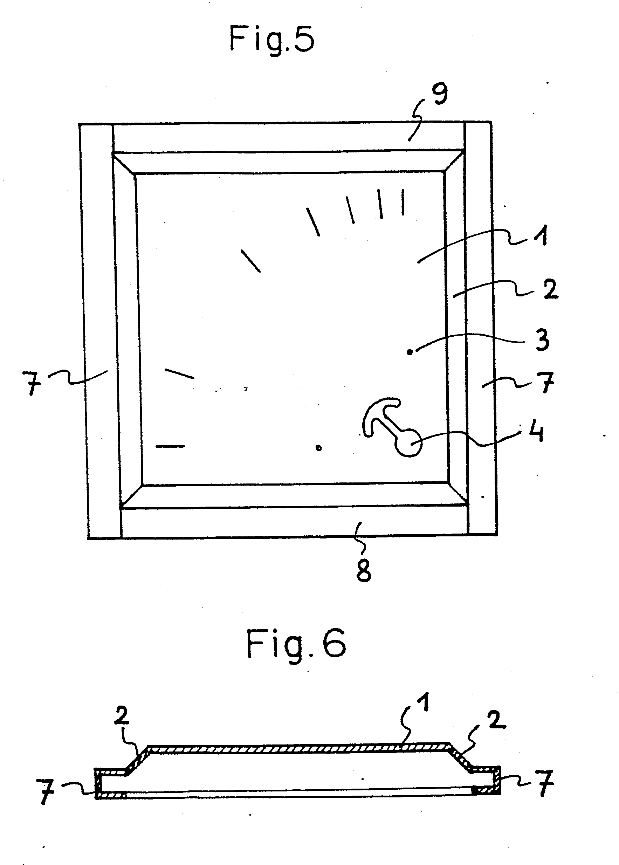

Eine weitere Ausbildungsform der Erfindung ist in den Fig. 5 und 6 dargestellt. Hier sind an die Skalenplatte 1 nicht nur die Blendenteile 2 angeformt, sondern zusätzlich Halterungs- und Führungsteile 7, 8 und 9, die zur Halterung und Führung des Deckglases dienen. Vorzugsweise sind die seitlichen Halterungsteile 7 als U-förmige Führungen für das Deckglas ausgebildet. Der untere Teil 8 ist als U-förmiger Anschlag für das Deckglas ausgebildet. Der Teil 9 ist jedoch als einfache Abwinkelung des Blendenteils ausgebildet, so daß die Anordnung oben offen ist, so daß das Deckglas von oben in die U-förmigen Führungen 7

7

G.H.Mirbeth 30

eingeschoben werden kann und durch den unteren U-förmigen Anschlag in seiner Lage gehalten wird. Auch hier sind alle Teile einstückig ausgebildet und durch ein Blech durch einfache Biege- und Stanzvorgänge gebildet.

Es soll noch betont werden, daß auch bei der Ausführungsform nach den Fig. 5 und 6 noch eine zusätzliche Drehpunktabdeckung für den Zeiger des Meßinstrumentes gebildet sein kann. Die Drehpunktabdeckung muß nicht, wie in den Fig. 3 und 4 dargestellt, in der Ecke der Skalenplatte angeordnet sein, sondern kann beispielsweise auch in der Mitte einer Skalenseite angeordnet sein.

Die Skalenplatte mit angeformter Blende sowie mit angeformter Drehpunktabdeckung und angeformter Deckglasführung ist sehr leicht und einfach herstellbar und vereinfacht die Montage des Meßinstrumentes. Außerdem ist eine wesentliche einfachere Gehäuseausbildung möglich. Wenn der Schlitz im Gehäuse, der zum Auswechseln der Skalenplatte dient, in geeigneter Weise bemessen wird, läßt sich auch die Skalenplatte mit angeformter Blende und sogar mit angeformter Deckglasführung leicht auswechseln. Es muß nur in an sich bekannter Weise dafür gesorgt werden, daß entsprechende Ausschnitte vorhanden sind, die ein Aufschieben der Skalenplatte auf die Zeigerachse ermöglichen.

8

H.G.Mirbeth 30

Patentansprüche

1. In einem Gehäuse angeordnetes Meßinstrument mit einer Skalenplatte, einer darauf angeordneten Blende und einem auf der Blende angeordneten Deckglas, d a d u r c h  g e k e n n z e i c h n e t, daß die Blende (2) einstückig mit der Skalenplatte (1) ausgebildet ist.

2. Meßinstrument nach Anspruch 1, dadurch gekennzeichnet, daß die Blende (2) an die Skalenplatte (1) angeformt ist.

3. Meßinstrument nach Anspruch 1 oder 2, dadurch gekennzeichnet, daß die Skalenplatte (1) aus Blech besteht und die Blende (2) den umgebogenen Rand der Skalenplatte (1) bildet.

4. Meßinstrument nach Anspruch 3, dadurch gekennzeichnet, daß die Skalenplatte (1) und die Blende (2) mindestens auf einem Teil ihrer Oberfläche mit einer Lackschicht überzogen sind.

5. Meßinstrument nach Anspruch 1 bis 4, dadurch gekennzeichnet, daß an die Skalenplatte (1) eine Abdeckung (5) für den Drehpunkt des Meßwerkzeigers angeformt ist.

ZT/P21-Hs/ki
2.2.1983

H.G.Mirbeth 30

6. Meßinstrument nach Anspruch 5, dadurch gekennzeichnet, daß die Drehpunktabdeckung (5) durch zweifache rechtwinkelige Abbiegung (51, 52) eines Teiles der Skalenplatte (1) gebildet ist.

7. Meßinstrument nach Anspruch 1 bis 6, dadurch gekennzeichnet, daß Anschläge für den Meßwerkzeiger an die Skalenplatte (1) angeformt sind.

8. Meßinstrument nach Anspruch 1 bis 7, dadurch gekennzeichnet, daß an mindestens zwei einander gegenüberliegenden Seiten der Skalenplatte (1) Führungen (7) für das Deckglas an dem Blendenrand (2) angeformt sind.

9. Meßinstrument nach Anspruch 8, dadurch gekennzeichnet, daß an den beiden Seiten und am unteren Rand der Skalenplatte (1) U-förmige Abbiegungen (7, 8) an der Blende (2) vorgesehen sind.

## Fig.1

## Fig.2

## Fig.3

## Fig.4

## Fig.5

## Fig. 6

Europäisches
Patentamt

**EUROPÄISCHER RECHERCHENBERICHT**

## EINSCHLÄGIGE DOKUMENTE

EP 84101224.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - C - 835 656 (DAIMLER BENZ)<br>* Spalte 4, Zeilen 69-71; Fig. 4 *<br>---- | 1,2,3,4 | G 12 B 11/02<br>G 01 D 13/02<br>G 01 R 1/08 |

| | RECHERCHIERTE SACHGEBIETE (Int. Cl. ³) |
|---|---|
| | G 01 D 11/00<br>G 01 D 13/00<br>G 01 R 1/00<br>G 12 B 11/00 |

Der vorliegende Recherchenbericht wurde für alle Patentansprüche erstellt.

| Recherchenort | Abschlußdatum der Recherche | Prüfer |
|---|---|---|
| WIEN | 24-05-1984 | KUNZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82